# EUROPÄISCHE PATENTANMELDUNG

(11) **EP 3 993 194 A1**
(43) Veröffentlichungstag der Anmeldung: **04.05.2022**
(21) Anmeldenummer: 21205271.6
(22) Anmeldetag: 28.10.2021
(51) Int. Cl.: H02B 13/035, H01F 27/04, H01H 1/06, H01H 1/14, H01R 13/03

(54) **HOCHSPANNUNGSKONTAKT FÜR EINE FÜR GEOMETRISCHE IMPERFEKTIONEN TOLERANTE HOCHSPANNUNGSVERBINDUNG SOWIE HOCHSPANNUNGSSTECKVERBINDUNG MIT EINEM SOLCHEN HOCHSPANNUNGSKONTAKT**

(30) Priorität: 03.11.2020 DE 102020128939
(71) Anmelder: TenneT TSO GmbH, 95448 Bayreuth (DE)
(72) Erfinder: Löbermann, Matthias, 31515 Wunstorf (DE)
(74) Vertreter: Scheffler, Jörg

(57) **Zusammenfassung**

Die Erfindung betrifft einen Hochspannungskontakt (2) für eine für geometrische Imperfektionen tolerante Hochspannungsverbindung (1), aufweisend eine mit einem ersten elektrischen Leiter (6) verbundene erste Kontaktfläche (3) und eine mit einem zweiten elektrischen Leiter (8) verbundene zweite Kontaktfläche (4), wobei die erste Kontaktfläche (3) eine konkave Grundform und die zweite Kontaktfläche eine konvexe Grundform aufweist. Ferner betrifft die Erfindung eine Hochspannungssteckverbindung mit einem solchen Hochspannungskontakt (2).

## Beschreibung

Die Erfindung betrifft einen Hochspannungskontakt für eine für geometrische Imperfektionen tolerante Hochspannungsverbindung, aufweisend eine mit einem ersten elektrischen Leiter verbundene erste Kontaktfläche und eine mit einem zweiten elektrischen Leiter verbundene zweite Kontaktfläche. Zudem betrifft die Erfindung eine Hochspannungssteckverbindung mit einem solchen Hochspannungskontakt.

Bekannte Hochspannungssteckverbindungen benötigen aufgrund normativer Anforderungen hinsichtlich Luft- und Kriechstrecken einen großen Bauraum, außer wenn sie mit einem Isoliergas gefüllt sind. Bekannte mit Isoliergas gefüllte Hochspannungssteckverbindungen sind als Einzelstücke hergestellte Schweißkonstruktionen mit sich hieraus ergebenden Fertigungstoleranzen. Damit ein derartiger Stecker und eine derartige Buchse trotz der Fertigungstoleranzen und der sich hieraus ergebenden geometrischen Imperfektionen ohne Weiteres miteinander hermetisch dichtend und elektrisch leitend verbindbar sind, werden sie, individualisiert oder aneinander angepasst, paarweise hergestellt, das heißt, dass ein Stecker nur mit einer dazugehörigen Buchse zuverlässig funktioniert.

Ist ein Hochspannungsmodul, wie zum Beispiel ein Transformator, defekt oder aufgrund von einer Wartung außer Betrieb zu nehmen, kann dieses nicht durch ein Ersatzmodul getauscht werden, da eine gasisolierte Hochspannungssteckverbindung mit einer anderen SteckerBuchsen-Kombination nicht zuverlässig erzeugbar ist.

Die geometrischen Imperfektionen der Hochspannungssteckverbindungen können einerseits zu Winkelfehlern zwischen den in Verbindung zu bringenden Kontaktflächen führen, andererseits zu einem radialen Versatz beziehungsweise zu einem Versatz senkrecht zur Steckrichtung des Steckverbinders der Kontaktflächen zueinander. Dies kann zu einer erheblichen Verkleinerung der Flächen führen, die bei einer Hochspannungssteckverbindung einen Kontakt erzeugen, wodurch die stromübertragende Fläche, mit einem entsprechenden Anstieg des Übergangswiderstands und einer Erhöhung der Temperatur an den Kontaktflächen verringert wird. Die Hochspannungssteckverbindung weist eine verringerte Zuverlässigkeit und Lebensdauer auf.

Aus der FR 2 277 451 A1 ist zudem eine elektrische Verbindung für Hochstromanwendungen, hierbei insbesondere der Elektrometallurgie, bekannt. Die elektrische Verbindung weist hierbei zwei sich gegenüberliegende und zueinander beabstandet angeordnete Kontaktelemente auf, welche aus einer Grundplatte und einer Ausformung bestehen. Diese Ausformungen können dabei konkav, konvex oder konkav und konvex ausgeführt sein. Der Bereich zwischen den in einer elastischen Hülle angeordneten Kontaktelementen ist ferner mit einem gut leitenden, flüssigen oder pasten- oder pulverförmigen Material gefüllt, sodass eine Bewegung der Kontaktelemente gegenüber einander ermöglicht wird.

Durch die US 6 390 826 B1 wird ferner eine über Federkontakte ausgeführte, lösbare Verbindung von z. B. Ball-Grid-Arrays aufweisenden integrierten Schaltkreisen mit einer Leiterplatte offenbart. Hierbei wird ein jeweiliger Kontakt mittels eines über eine Feder gelagerten, konkav ausgeformten Kontaktelements auf der Leiterbahn und eines entsprechend konkav ausgeformten Kontaktelements des integrierten Schaltkreises verwirklicht. Zwischen den Kontaktelementen kann in einer Ausführungsform zudem eine elektrisch leitfähige, elastische Ausgleichsmatte angeordnet sein, über welche die Verbindung etabliert wird.

Die DE 34 21 799 A1 beschreibt überdies eine elektrische Verbindung von über Federkontakte mit einer Leiterplatte in Verbindung gebrachten Prüfspitzen. Diese elektrische Verbindung ist dabei durch die federnde Ausgestaltung sowie ein über Kugelgelenke ausgeführtes Lagern der Prüfspitzen winkel- und längenfehlertolerant ausgebildet.

Der WO 2014 / 055 227 A1 ist weiterhin eine elektrische Verbindung zu entnehmen, wobei zwei Kontaktelemente verwendet werden, die über ihre Formgebung derart zusammenwirken, dass eine Verteilung des Kontaktdrucks über die Kontaktstelle der Kontaktelemente zumindest teilweise mit einer Verteilung des elektrischen Stromflusses über die Kontaktstelle zusammenfällt. Dies kann beispielsweise über konvexe und konkave Kugelformen der Kontaktelemente erzielt werden.

Die US 2006 / 0 051 990 A1 gibt zudem eine elektrische Verbindung zweier Kontaktelemente an, bei welcher zur Vermeidung eines Verschleißes der Kontaktflächen der Kontaktelemente aufgrund eines hohen Stromflusses zwischen den Kontaktelementen ein Zwischenelement aus einem elektrisch leitfähigen Metallschaum angeordnet ist.

Aus der CN 1 10 048 268 A ist außerdem ein explosionsgeschützter Steckverbinder bekannt, welcher eine Buchse und einen Stecker aufweist. In der Buchse sind dabei zwei Klemmkontakte angeordnet, in welche zwei über einen Spindeltrieb beweglich im Stecker gelagerte Stiftkontakte einbringbar sind. Zum Einbringen der Stiftkontakte in die Klemmkontakte werden Buchse und Stecker ineinandergesteckt und die Stiftkontakte anschließend über den Spindelantrieb in die Klemmkontakte verfahren. Um dabei die Bewegung der Stiftkontakte ohne einen Defekt der mit den Stiftkontakten verbundenen elektrischen Leiter zu ermöglichen, weisen die innerhalb des Steckers verlaufenden Leiter eine Lose auf, welche sich bei Bewegung der Steckkontakte verringert. Zur Realisierung des Explosionsschutzes weist der Steckverbinder zudem mehrere Dichtungen auf.

Die DE 693 06 886 T2 beschreibt ebenfalls einen explosionsgeschützten Steckverbinder zum Einsatz in explosiver, d. h. brenn- und entflammbarer Gasatmosphäre. Der Steckverbinder weist dabei wiederum eine Buchse sowie einen Stecker auf, wobei in der Buchse zwei Sockelkontakte und in dem Stecker zwei Stiftkontakte ausgeführt sind. Nach dem Ineinanderstecken von Stecker und Buchse werden die endseitig eines Innenzylinders der Buchse angeordneten Sockelkontakte über eine Antriebseinrichtung in den Stecker verfahren, bis die Stiftkontakte in die Sockelkontakte eingreifen. Hierbei wird ein mit den Sockelkontakten verbundener und innerhalb des Innenzylinders der Buchse verlaufender elektrischer Leiter mitsamt des Innenzylinders verschoben, sodass keine Biegebelastung auf den Leiter wirkt. Der Steckverbinder weist zudem eine Einlass- sowie eine Auslassöffnung auf, über welche vor der Kopplung der Stiftkontakte mit den Sockelkontakten zur Entlüftung des Inneren des Steckverbinders ein Reingas geleitet wird und somit gegebenenfalls im Inneren vorhandene explosive Gase ausgeführt werden.

Der DE 692 00 142 T2 ist zudem eine elektrische Anschlussvorrichtung für Leiter zu entnehmen, welche wandartige Kontaktpartner aufweist, an denen die zu verbindenden Leiter befestigt sind. Ein Zwischenraum der Kontaktpartner ist dabei über eine umlaufende Dichtung abgedichtet und weist nach dem Verbinden der Kontaktpartner mehrere ineinandergreifende konzentrische Ringausformungen auf, mittels welchen eine hohe Verschachtelung des Zwischenraums erzielt wird. Dies führt zur Erhöhung der Länge der Lecklinien und Funkenstrecken, die die beiden entscheidenden Größen der dielektrischen Spannungsfestigkeit bilden. Zur Reduzierung der Luftfeuchte im Zwischenraum ist in den Zwischenraum zudem ein feuchtigkeitsabsorbierendes Material eingebracht.

In der GB 975 395 A wird ferner eine elektrische Steckverbindung aus einer Verbindungsbuchse und einem Stecker beschrieben, wobei diese einen Kontakt verwirklichen, der eine für geometrische Imperfektionen tolerante Verbindung ermöglicht. Hierfür weist eine mit einem ersten elektrischen Leiter verbundene erste Kontaktfläche der Steckverbindung eine konkave Grundform und eine mit einem zweiten elektrischen Leiter verbundene zweite Kontaktfläche der Steckverbindung eine konvexe Grundform auf.

Der Erfindung liegt die Aufgabe zugrunde, eine Möglichkeit zu schaffen, auch bei geometrischen Imperfektionen von Hochspannungssteckverbindungen einen Hochspannungskontakt zu ermöglichen, der auch bei einem Gebrauch von nicht aneinander angepassten Steckern und Verbindungsbuchsen einfach und zuverlässig zu erzeugen ist.

Diese Aufgabe wird erfindungsgemäß mit einem Hochspannungskontakt gemäß den Merkmalen des Anspruchs 1 gelöst sowie mit einer Hochspannungssteckverbindung gemäß den Merkmalen des nebengeordneten Anspruchs.

Die weitere Ausgestaltung der Erfindung ist den Unteransprüchen zu entnehmen.

Erfindungsgemäß ist also ein Hochspannungskontakt für eine für geometrische Imperfektionen tolerante Hochspannungsverbindung vorgesehen, der eine mit einem ersten elektrischen Leiter verbundene erste Kontaktfläche und eine mit einem zweiten elektrischen Leiter verbundene zweite Kontaktfläche aufweist, wobei die erste Kontaktfläche eine konkave Grundform und die zweite Kontaktfläche eine konvexe Grundform aufweist.

Elektrische Leiter sind beispielweise Stromkabel oder Stromschienen, deren Endflächen direkt die Kontaktflächen ausbilden können. Die Kontaktflächen, die den Hochspannungskontakt ausbilden, können jedoch zum Beispiel auch mittels Aderendhülsen ausgebildet werden. Die Grundform der Kontaktfläche bezeichnet die übergeordnete oder vereinfachte Form der Kontaktfläche. Rauigkeiten, Unebenheiten oder hervorstehende oder zurückspringende Teilbereiche stehen einer konkaven oder konvexen Grundform nicht entgegen.

Eine Hochspannungsverbindung mit einem Winkelfehler und hieraus resultierenden, nicht zueinander ausgerichteten Kontaktflächen weist erfindungsgemäß aufgrund der ersten konkaven Kontaktfläche und der zweiten konvexen Kontaktfläche eine stromübertragende Kontaktfläche auf, die gegenüber einer konstruktiv vorgesehenen Kontaktfläche nicht wesentlich verringert ist.

Weist die Hochspannungsverbindung des Weiteren einen Versatz senkrecht zur Steckrichtung des Steckverbinders auf, wirken die konkave Kontaktfläche und die konvexe Kontaktfläche derart zusammen, dass sie eine dem Versatz entgegenwirkende Kraft erzeugen und somit zu einer zumindest teilweisen Kompensation des Versatzes führen. Eine reproduzierbare große stromübertragende Kontaktfläche wird erzeugbar.

Eine bevorzugte Ausführungsform weist eine Kontaktfläche auf, deren konkave und/oder konvexe Grundform einen Winkelbereich von kleiner als 20°, bevorzugt kleiner als 10° und weiter bevorzugt kleiner als 5° ausbildet. Eine kreisförmige Geometrie angenommen, entspricht dies also einem Teilkreis von 20°, 10° oder 5°. Dies ist vorteilhaft, da der gesamte Bereich der Kontaktfläche im Wesentlichen senkrecht zur Kontaktkraft ausgerichtet und daher kontaktkraft- und somit auch stromübertragend ist.

Eine vorteilhafte Ausführungsform sieht vor, dass die konkave und die konvexe Grundform rotationssymmetrisch insbesondere in Haupterstreckungsrichtung der elektrischen Leiter sind, wobei bevorzugt der Radius der konkaven Form gleich groß oder größer als der Radius der konvexen Form ist. Eine rotationssymmetrische Geometrie hat den Vorteil, dass ein Winkelfehler zumindest in einer Raumrichtung keinen Einfluss auf die Größe der Kontaktfläche hat.

Eine besonders praxisgerechte Ausführungsform sieht eine konkave und/oder eine konvexe Grundform vor, die sphärisch ist, wobei bevorzugt der Radius der rotationssymmetrischen konkaven Form gleich groß oder größer als der Radius der rotationssymmetrischen konvexen Form ist. Ein Winkelfehler in einer beliebigen Raumrichtung hat hierdurch keinen Einfluss auf die Größe der Kontaktfläche.

Es hat sich als vorteilhaft herausgestellt, wenn die erste und/oder die zweite Kontaktfläche eine strukturierte Oberfläche bevorzugt mit einer Strukturgröße von 5 cm bis 1 mm aufweist. Insbesondere hat es sich als vorteilhaft herausgestellt, wenn eine Oberfläche eine Vielzahl von pyramidenförmigen oder pyramidenstumpfförmigen Erhebungen aufweist. Hierdurch wird eine Vergrößerung der Oberfläche bei gleichbleibendem Bauraum ermöglicht, wodurch eine Vergrößerung der Kontaktfläche ermöglicht wird. Dies führt zu einer geringeren Stromdichte, einem verringerten Übergangswiderstand, einer erhöhten Zuverlässigkeit und Lebensdauer des Hochstromkontakts.

Eine bevorzugte Ausführungsform weist zwischen der ersten und der zweiten Kontaktfläche einen verformbaren elektrischen Leiter, wie zum Beispiel einen Metallschaum, insbesondere einen offenporigen Metallschaum, auf. Der Metallschaum ist beim Schließen des Hochstromkontakts plastisch verformbar und füllt beim Schließen bei Imperfektionen der Kontaktflächen Bereiche auf, die ansonsten an der Stromübertragung nicht beteiligt wären, und verringert hierdurch die Stromdichte in anderen Teilbereichen der Kontaktfläche. Vorteilhafterweise besteht der Metallschaum aus Silber oder einer Silberlegierung oder aus Kupfer oder einer Kupferlegierung. Diese Werkstoffe weisen eine gute plastisch Verformbarkeit sowie einen geringen Übergangswiderstand auf und verfügen über eine hohe Leitfähigkeit. Ein Hochspannungskontakt mit einem geringen Widerstand wird ermöglicht.

Es hat sich als vorteilhaft herausgestellt, wenn zumindest eine Kontaktfläche eine umlaufende, ringförmige Erhebung aufweist, da hierdurch das Herausfallen oder Herausquetschen des verformbaren elektrischen Leiters beim Schließen des Kontakts vermieden werden kann.

Erfindungsgemäß ist eine Hochspannungssteckverbindung mit einem erfindungsgemäßen Hochspannungskontakt vorgesehen, die auch bei geometrischen Imperfektionen der Hochspannungssteckverbindungen einen Hochspannungskontakt ermöglicht, der auch bei einem Gebrauch von nicht aneinander angepassten Steckern und Buchsen einfach und zuverlässig zu erzeugen ist. Besonders vorteilhaft ist ein erfindungsgemäßer Hochspannungskontakt bei der Erzeugung von gasisolierten Hochstromverbindungen, da hier sowohl die Dichtflächen als auch die Hochspannungskontaktflächen miteinander in Kontakt treten müssen, also das Problem einer Doppelpassung zu lösen ist.

Die Erfindung lässt verschiedene Ausführungsformen zu. Zur weiteren Verdeutlichung ihres Grundprinzips ist eine davon in den Zeichnungen dargestellt und werden nachfolgend beschrieben. Diese zeigen in
- Fig. 1: eine Seitenansicht einer Hochspannungsverbindung;
- Fig. 2: eine Seitenansicht einer Hochspannungssteckverbindung.

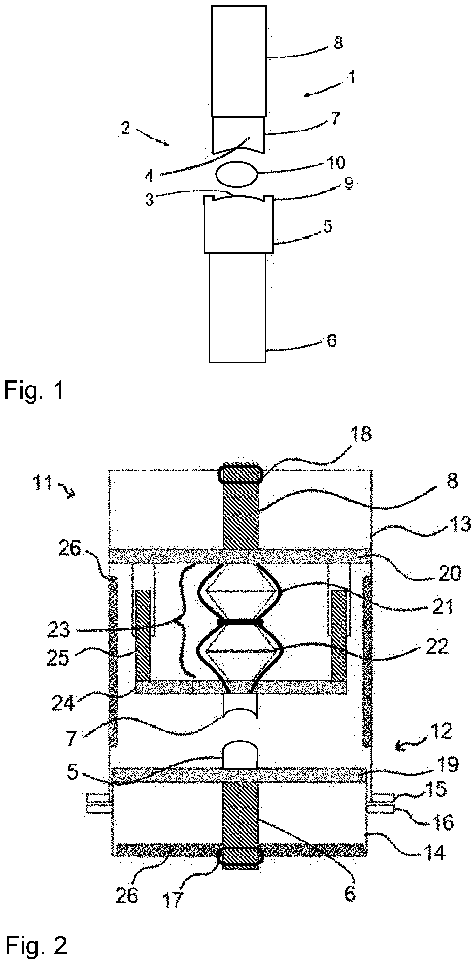

Figur 1 zeigt eine Hochspannungsverbindung 1 mit einem Hochspannungskontakt 2, aufweisend eine erste Kontaktfläche 3 und eine zweite Kontaktfläche 4, die bei einem geschlossenen Hochspannungskontakt 2 miteinander in Verbindung stehen und eine elektrisch leitende Verbindung erzeugen. Die erste Kontaktfläche 3 weist eine rotationssymmetrische konvexe Grundform auf und ist als eine erste Aderendhülse 5 ausgeführt, die an einem ersten elektrischen Leiter 6, vorliegend einem Stromkabel, befestigt ist. Die zweite Kontaktfläche 4 weist eine rotationssymmetrische konkave Grundform auf und ist als eine zweite Aderendhülse 7 ausgeführt, die an einem zweiten elektrischen Leiter 8, vorliegend einem Stromkabel, befestigt ist. Die erste Aderendhülse 5 weist eine umlaufende, ringförmige Erhebung 9 auf, die über die erste Kontaktfläche 3 hervorragt. Zwischen der ersten Kontaktfläche 3 und der zweiten Kontaktfläche 4 ist ein verformbarer elektrischer Leiter 10 angeordnet.

Figur 2 zeigt eine gasisolierte Hochspannungssteckverbindung 11 mit einer zweiteiligen, druckführenden Umschließung 12, bestehend aus einem ersten Teil der Umschließung 12, der eine Verbindungsbuchse 13 ausbildet, und einem zweiten Teil der Umschließung 12, der einen Stecker 14 ausbildet. Die Verbindungsbuchse 13 weist einen Flansch 15 und der Stecker 14 weist einen Flansch 16 auf, wobei die Flansche 15, 16 zum Verschrauben der Verbindungsbuchse 13 mit dem Stecker 14 dienen. Im verschraubten Zustand ist die druckführende Umschließung 12 hermetisch dicht. Die elektrischen Leiter 6, 8 sind in Form von Stromkabeln realisiert, die durch Kabelschotts 17, 18 in die Umschließung 12 eingeführt werden. Das in den Stecker 14 geführte Stromkabel wird durch den isolierten Gehäuseanschluss bis zu einer Isolationsplatte 19 geführt, die mechanisch mit dem Stromkabel verbunden ist, auf das Stromkabel wirkende Kräfte aufnimmt und in den Stecker 14 ableitet. Oberhalb der Isolationsplatte 19 weist das Stromkabel eine erste Aderendhülse 5 auf, die im dargestellten Zustand keinen Kontakt mit der Verbindungsbuchse 13 hat.

In die Verbindungsbuchse 13 wird der zweite elektrische Leiter 8 in Form eines Stromkabels von dem Kabelschott 18 bis zu einer Isolationsplatte 20 geführt, die mechanisch mit dem Stromkabel verbunden wird, auf das Stromkabel wirkende Kräfte aufnimmt und in die Verbindungsbuchse 13 ableitet. Jenseits der Isolationsplatte 20 weist das Stromkabel keine Isolierung auf. Einzelleiter 21 des Stromkabels sind vereinzelt und an der Außenkontur eines flexiblen Stützkörpers 22 verlegt. Ein flexibler Bereich 23 des elektrischen Leiters 8 wird hierdurch realisiert.

Die Einzelleiter 21 werden vom Stützkörper 22 durch eine Isolationsplatte 24 geführt und enden in einer zweiten Aderendhülse 7. Die Aderendhülse 7 ist mit der Isolationsplatte 24 verbunden, die die auf die zweite Aderendhülse 7 wirkenden Kräfte über ein Längenverstellelement 25 mittels der Isolationsplatte 20 in die Verbindungsbuchse 13 leitet. Mittels des Längenverstellelements 25 wird die zweite Aderendhülse 7 der Verbindungsbuchse 13 zur ersten Aderendhülse 5 des Steckers 14 verfahren.

Zur Aufnahme von Restfeuchtigkeit in dem Isoliergas weist die Umschließung 12 mehrere Trocknungsmittel 26 auf.

**BEZUGSZEICHENLISTE**

| | | | |
|---|---|---|---|
| 1 | Hochspannungsverbindung | 16 | Flansch |
| 2 | Hochspannungskontakt | 17 | Kabelschott |
| 3 | erste Kontaktfläche | 18 | Kabelschott |
| 4 | zweite Kontaktfläche | 19 | Isolationsplatte |
| 5 | erste Aderendhülse | 20 | Isolationsplatte |
| 6 | erster elektrischer Leiter | 21 | Einzelleiter |
| 7 | zweite Aderendhülse | 22 | Stützkörper |
| 8 | zweiter elektrischer Leiter | 23 | Bereich |
| 9 | ringförmige Erhebung | 24 | Isolationsplatte |
| 10 | verformbarer elektrischer Leiter | 25 | Längenverstellelement |
| 11 | Hochspannungssteckverbindung | 26 | Trocknungsmittel |
| 12 | Umschließung | | |
| 13 | Verbindungsbuchse | | |
| 14 | Stecker | | |
| 15 | Flansch | | |

## Patentansprüche

1. Hochspannungskontakt (2) für eine für geometrische Imperfektionen tolerante Hochspannungsverbindung (1), aufweisend eine mit einem ersten elektrischen Leiter (6) verbundene erste Kontaktfläche (3) und eine mit einem zweiten elektrischen Leiter (8) verbundene zweite Kontaktfläche (4), **dadurch gekennzeichnet, dass** die erste Kontaktfläche (3) eine konkave Grundform und die zweite Kontaktfläche eine konvexe Grundform aufweist.

2. Hochspannungskontakt (2) nach Anspruch 1, **dadurch gekennzeichnet, dass** die konkave und/oder die konvexe Grundform einen Winkelbereich von kleiner als 20°, bevorzugt kleiner als 10° und weiter bevorzugt kleiner als 5° ausbildet.

3. Hochspannungskontakt (2) nach Anspruch 1 oder Anspruch 2, **dadurch gekennzeichnet, dass** die konkave und/oder die konvexe Grundform rotationssymmetrisch insbesondere in Haupterstreckungsrichtung der elektrischen Leiter (6, 8) sind, wobei der Radius der rotationssymmetrischen konkaven Form gleich groß oder größer als der Radius der rotationssymmetrischen konvexen Form ist.

4. Hochspannungskontakt (2) nach zumindest einem der vorhergehenden Ansprüche, **dadurch gekennzeichnet, dass** die konkave und/oder die konvexe Grundform sphärisch ist, wobei der Radius der rotationssymmetrischen konkaven Form gleich groß oder größer als der Radius der rotationssymmetrischen konvexen Form ist.

5. Hochspannungskontakt (2) nach zumindest einem der vorhergehenden Ansprüche, **dadurch gekennzeichnet, dass** die erste Kontaktfläche (3) und/oder die zweite Kontaktfläche (4) eine strukturierte Oberfläche, insbesondere eine Vielzahl von pyramidenförmigen oder pyramidenstumpfförmigen Erhebungen, aufweist.

6. Hochspannungskontakt (2) nach zumindest einem der vorhergehenden Ansprüche, **dadurch gekennzeichnet, dass** zwischen der ersten Kontaktfläche (3) und der zweiten Kontaktfläche (4) ein verformbarer elektrischer Leiter (10), insbesondere ein Metallschaum, insbesondere ein offenporiger Metallschaum, angeordnet ist.

7. Hochspannungskontakt (2) nach zumindest einem der vorhergehenden Ansprüche, **dadurch gekennzeichnet, dass** der Metallschaum aus Silber oder einer Silberlegierung oder aus Kupfer oder einer Kupferlegierung besteht.

8. Hochspannungskontakt (2) nach zumindest einem der vorhergehenden Ansprüche, **dadurch gekennzeichnet, dass** zumindest eine Kontaktfläche (3, 4) eine umlaufende ringförmige Erhebung (9) aufweist.

9. Hochspannungssteckverbindung (11) mit einem Hochspannungskontakt (2) nach zumindest einem der vorhergehenden Ansprüche.

10. Hochspannungssteckverbindung (11) mit einem Hochspannungskontakt (2) nach Anspruch 9, **dadurch gekennzeichnet, dass** die Hochspannungssteckverbindung (11) gasisoliert ist.
